# EUROPEAN PATENT APPLICATION

(11) **EP 4 759 532 A1**
(43) Date of publication of application: **17.06.2026**
(21) Application number: 24218673.2
(22) Date of filing: 10.12.2024
(51) Int. Cl.: B30B 11/16, B30B 15/32, B30B 15/34, H01M 4/04, H01M 4/139

(54) **PELLETIZING DEVICE, PELLETIZING SYSTEM AND METHOD FOR DRY BATTERY ELECTRODE MANUFACTURING**

(71) Applicant: SAMSUNG SDI CO., LTD., Yongin-si, Gyeonggi-do 17084 (KR)
(72) Inventor: Carbonari, Gilberto, 80807 München (DE); Buchholz, Daniel, 80639 München (DE)
(74) Representative: Gulde & Partner

(57) **Abstract**

The present disclosure refers to a pelletizing device (100), for a dry battery electrode (DBE) manufacturing process. The pelletizing device (100), that allows more flexibility throughout the DBE manufacturing process, includes two rolls (101, 102) arranged in parallel to one another, wherein the rolls (101, 102) rotate in opposite directions, wherein at least one of the rolls (101, 102) comprises a plurality of cavities (103) in which pellets can be formed and wherein the structure of the cavities (103) is based on the desired shape and size of the pellets.

## Description

### Field of the Disclosure

The present disclosure relates to dry battery electrode manufacturing.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Battery industrialization confronts a bottleneck to increase industrial efficiency, decrease energy consumption, and enhance battery performances, especially the manufacturing of advanced next-generation batteries. The future for high-safety and high-energy batteries is regarded as lying in solid-state batteries (SSBs) with thick solid electrodes and thin solid electrolytes. Batch productions of SSBs require a specific industrial design that differs from the conventional technique. The dry battery electrode (DBE) technique is an emerging concept and possesses unique compatibilities toward SSBs, drawing significant attention from academia to the industry.

In order to obtain optimized granules or pellets for subsequent manufacturing steps, a mixing process has to be modified. This means that obtaining optimal granules or pellets could have an impact on how the granules or pellets components are dispersed and mixed.

It is therefore an objective of the present invention to improve a pelletizing device, a pelletizing system and a method for pelletizing DBE materials and have more flexibility throughout the manufacturing process.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a pelletizing device, for a dry battery electrode manufacturing process, includes two rolls arranged in parallel to one another, wherein the rolls rotate in opposite directions, wherein at least one of the rolls includes a plurality of cavities in which pellets can be formed and wherein the structure of the cavities is based on the desired shape and size of the pellets.

According to another aspect of the present disclosure, a pelletizing system, for a dry battery electrode (DBE) manufacturing process, includes a compaction system for compacting an extruded mass or a mixed mass, and a pelletizing device described above, wherein the compaction system is connected to the pelletizing device to feed compacted extruded mass or compacted mixed mass to the pelletizing device.

Yet another aspect of the present disclosure refers to a method for dry battery electrode (DBE) manufacturing, wherein the method includes the steps of compacting an extruded mass or compacting a mixed mass and feeding the compacted extruded mass or the compacted mixed mass to a pelletizing device described above to form pellets.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view on a pelletizing device according to an embodiment.
- Fig. 2: illustrates a schematic cross-sectional view on a roll of a pelletizing device according to another embodiment.
- Fig. 3: illustrates front and lateral views of two examples of rolls engraving patterns of pelletizing device rolls.
- Fig. 4: illustrates detailed scheme of the pelletizing device of Fig. 1 in a DBE manufacturing process.
- Fig. 5: illustrates a centrifugal sieving system as part of a pelletizing system.
- Fig. 6: illustrates a schematic diagram of a method for dry battery electrode (DBE) manufacturing according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a pelletizing device, for a dry battery electrode (DBE) manufacturing process, includes two rolls arranged in parallel to one another. The rolls rotate in opposite directions, wherein at least one of the rolls includes a plurality of cavities in which pellets can be formed. The structure of the cavities is based on the desired shape and size of the pellets.

In other words, the rolls press against each other, whereas pellets are being pressed from an extruded mass or a mixed mass that can be fed to the pelletizing device. The pellets are formed in the cavities which can for example be engravings. The rolls are closest to each other in a pressing zone, where the pellets or granules are pressed.

One roll or both rolls can be made of metal, polymer, or polymer -coated metal. The rolls materials can change for anode or cathode applications. It is also possible that the rolls are coated in order to prevent sticking of the pellets or granules and erosion of the roll's material.

According to a first embodiment of the present disclosure, at least one of the rolls includes a temperature-control-device allowing temperature control of the roll via internal flow of water, steam or oil. The temperature-control-device can be used to cool the roll or the rolls. As an internal cooling system it can be arranged as a cooling coil on the inside of the rolls as to cool the surface and especially the cavities of the rolls, to effectively cool down the formed pellets in the cavities. This facilitates the ejection of the pellets out of the cavities, since the pellets are less sticky the cooler they are. Furthermore this increases the stability of the shape of the pellets. In other words, the temperature of the rolls can be tuned to facilitate the release of the granules or pellets. Low temperature could improve granules detachment from the engraved rolls.

According to another embodiment of the present disclosure at least one roll includes at least one channel that leads to at least one cavity and is connected to a compressed air system, in order to facilitate release of the pellets. The channel can be formed from a pipe or a tube. By the help of the compressed air system the pellets can be removed by a pressure building up between the pellet and the surface of the cavity, until the pressure is too high and the pellet is released from the cavity. The channel can lead to the bottom of the engraved cavity, meaning the deepest section of the cavity. In one embodiment all cavities are connected to the channel. The channel can include multiple part-channels wherein every part-channel is connected to a cavity or a small number of cavities.

According to another embodiment of the present disclosure brushes or blades are placed close to a pellet ejection area to facilitate the removal of the pellets. The pellet ejection area can be close to the beforementioned pressing zone. Outside of the pressing zone the pellets can be ejected. To facilitate the process of pelletizing, the ejection direction can be with the direction of gravity so that the pellets, when ejected, can fall downwards. By placing the brushes under the rolls, the ejection can be forced in an area where a direct path downwards in the direction of gravity is not blocked by any obstacles.

According to another aspect of the present disclosure, a pelletizing system, for a dry battery electrode (DBE) manufacturing process, includes a compaction system for compacting an extruded mass or a mixed mass and a pelletizing device. The compaction system is connected to the pelletizing device to feed compacted extruded mass or compacted mixed mass to the pelletizing device. The beforementioned disclosure concerning the pelletizing device applies analogously to the pelletizing system.

After a mixture of active material, which can be anodic or cathodic, conductive additives and polymeric binder is mixed in a continuous mixing process, the mixed mass or extruded mass is being compacted to improve feeding to the pelletizing device. The mixing can take place in a screw extruder. The manufacturing of the pellets is then carried out by the means of a drop roller with a specific roll geometry and configuration.

According to one embodiment, the pelletizing system further includes a sieving system connected to the pelletizing device, to separate pellets of a chosen size from trimming of the compacted extruded mass of compacted mixed mass and pellets of a size different from the chosen size. Trimming occurs in the parts of the rolls, where no cavities are arranged to form pellets. These trimmings are therefore initially sieved out of the process.

According to another embodiment, a recycle transport system is connected with the sieving device and the compaction system. The trimmings and possibly pellets that do not have the desired properties and dimensions can be recycled into the compaction system so that no material is wasted. Since the pelleting device can have a temperature-control-system, the recycle transport could also be used for an indirect temperature control of the compaction system, whereas cooled pellets and trimming is being reintroduced into the compaction system, lowering the temperature of the mixed mass or extruded mass in the compaction system. By controlling the amount of recycled material, the temperature can be controlled.

According to another embodiment, a fibrillation degree detection system is arranged before the compaction system and/or wherein a fibrillation degree detection system is arranged after the pelletizing device. Several other detection systems can be placed between all steps to further assess optical properties and rheology of the pellets or granules. All these operations have to be carried out in a temperature-controlled manner by the means of an air-cooling system.

According to another embodiment, at least one optical camera system is arranged after the pelletizing device, and/or wherein at least one optical camera system is arranged after the sieving device. The camera system can for example be connected to an evaluation unit which can interpret image files that were recorded by the optical camera system. The optical camera system can for example determine different granule or pellet colors.

According to another embodiment, a tilted surface is placed after the sieving device, acting as pellets accumulation zone. The accumulation zone can be useful before feeding the pellets to a film formation process for the dry battery electrode manufacturing. This can help to maintain a continuous process. While the pellets accumulate in the accumulation zone, the film formation can take place. The next film formation can be started immediately after, when enough pellets have accumulated in the accumulation zone.

According to another embodiment, a control camera system is arranged in the area of the tilted surface and wherein the control camera system is equipped to measure a flowing angle and/or cohesion of the pellets in the area of the tilted surface. The control camera system makes it possible to control the conveying of the pellets. It also allows to check if the pellets agglomerate or stick to surfaces of the system. If the pellets are too sticky, a following film formation for the dry battery electrode cannot be executed uniformly.

According to another embodiment, the pelletizing system further includes an air-cooling system that is equipped to lower and/or maintain the temperature of the pellets leaving the pelletizing device at a value between 0°C and 50 °C. The temperature range of 0°C to 50°C ensures, that the pellets structure is stable and the pellets do not stick to one another. The temperature range facilitates the whole process including the ejection of the formed pellets out of the pelletizing device.

According to another aspect of the present disclosure, a method for dry battery electrode (DBE) manufacturing includes the steps of compacting an extruded mass or compacting a mixed mass and feeding the compacted extruded mass or the compacted mixed mass to a pelletizing device to form pellets. The pelletizing device is a pelletizing device according to the invention. The beforementioned disclosure concerning the pelletizing device applies analogously to the method.

According to one embodiment, the pellets are expelled from the pelletizing device, are separated from trimmings and sent to a feeding system for a formation step. In other words, only the pellets of a desired size are fed to a feeding system, whereas trimmings and possibly pellets of a different size are not used for the formation step, thus the formation step can be uniformly with usage of pellets of a specific identical size.

According to another embodiment, the method is carried out by a pelletizing system described above. The beforementioned disclosure concerning the pelletizing system applies analogously to the method.

### Specific Embodiments

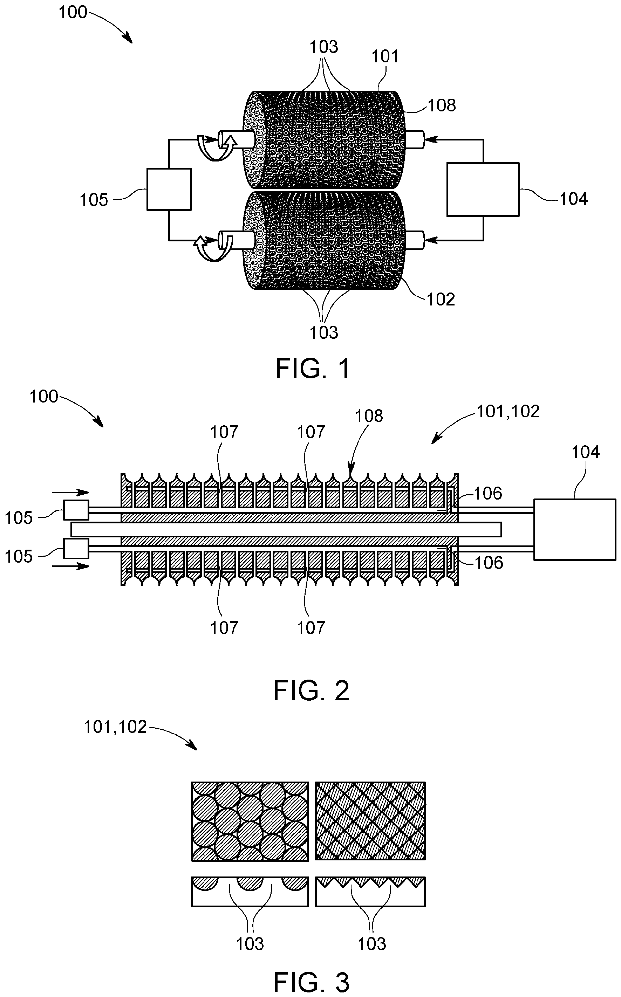

Fig. 1 is a schematic view on a pelletizing device 100 according to an embodiment of the invention. The pelletizing device 100 includes two cooperating rolls 101, 102 arranged in parallel to one another. The rolls 101, 102 rotate in opposite directions. Both rolls 101, 102 include a plurality of cavities 103 in which pellets can be formed. The structure of the cavities 103 is based on the desired shape and size of the pellets. For the formation of pellets, made from an extruded mass, the rolls 101, 102 press the pellets in the area where the rolls 101, 102 are closest to each other. In this embodiment both rolls 101, 102 are made of metal and are coated in order to prevent sticking of the pellets or granules and erosion of the roll's material.

The rolls 101, 102 include a temperature-control-device 104 allowing temperature control of each roll 101, 102 via internal flow of water, steam or oil. The temperature-control-device 104 is used to cool the rolls 101, 102. This facilitates the ejection of the pellets out of the cavities 103, since the pellets are less sticky the cooler they are. Furthermore this increases the stability of the shape of the pellets. In other words the temperature of the rolls 101, 102 can be tuned to facilitate the release of the granules or pellets. Furthermore the rolls 101, 102 includes a compressed air system 105 that is described in more detail in Fig. 2.

Fig. 2 illustrates a schematic cross-sectional view on a roll of a pelletizing device 100. It is shown, that the rolls 101, 102 include a channel 106 that includes several part-channels 107 that lead to the bottom of the cavities 103 from the inside of the rolls 101, 102. The channel 106 and part channels 107 are connected to the compressed air system 105, in order to facilitate release of the pellets. The channel 106 is formed from a pipe. By the help of the compressed air system 105 the pellets can be removed by a pressure building up between the pellet and the surface of the cavity 103, until the pressure is too high and the pellet is released from the cavity 103. Furthermore it is shown in Fig. 2 that the temperature-control-device 104 is arranged in a way that cooling fluid is passed in the area of the surface 108 of the rolls 101, 102 so that cooling of the cavity 103 is efficient.

Fig. 3 illustrates front and lateral views of two examples of rolls 101, 102 engraving patterns for the formation of cavities. On the left side the pattern is spherically arranged, whereas the pattern on the right side is cubically arranged.

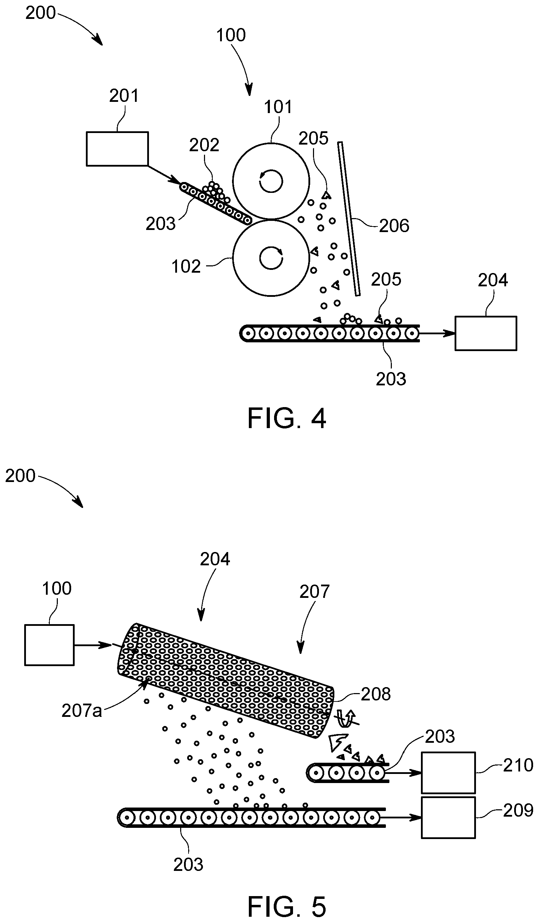

Fig. 4. illustrates detailed scheme of the pelletizing device 100 of Fig. 1 in a DBE manufacturing process. The pelletizing device 100 is part of a pelletizing system 200. The pelletizing system 200 includes a compaction system 201 for compacting an extruded mass. The compaction system 201 is connected to the pelletizing device 100 to feed compacted extruded mass 202 to the pelletizing device 100. The extruded mass 202 is transported to the pelletizing device 100 by the means of a conveyor belt 203.

The pelletizing system 200 further includes a sieving system 204 connected to the pelletizing device 100, to separate pellets of a chosen size from trimming 205 of compacted extruded mass 202 and pellets of a size different from the chosen size. Trimming occurs in the parts of the rolls 101, 102, where no cavities 103 are arranged to form pellets. These trimmings 205 are therefore initially sieved out of the process.

Fig. 5 illustrates a centrifugal sieving system 204 as part of a pelletizing system 200. It is shown that the sieving system 204 includes a tilted roll-sieve 207. The roll-sieve 207 includes openings 207a in the size of the desired pellet size. Because of the tilt of the roll-sieve 207, the pellets and trimmings 205 pass the roll-sieve 207 in its longitudinal direction, whereas pellets in the desired size or smaller fall through the openings 207a. The trimmings 205 and pellets that are too big are ejected from the roll-sieve 207 at a front end 208 of the roll-sieve 207. The pellets in the desired size can then be transported to a film formation step 209. The trimmings 205 can be transported to a recycling system 210.

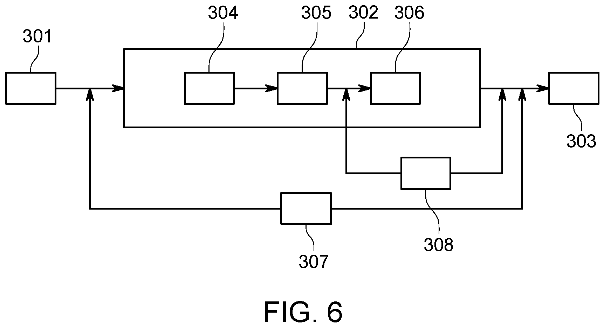

Fig. 6 illustrates a schematic diagram of a method for dry battery electrode (DBE) manufacturing according to an embodiment. The extruded mass 202 comes from a continuous mixing step 301 and is afterwards introduced into a pelletizing process 302. After pelletizing the formed pellets are introduced into a film formation process 303. The pelletizing process 302 is divided into the steps of extruded mass compaction 304, pellet manufacturing 305 and pellet sieving 306.

Additionally, a recycling step is performed after the pellet sieving 306. The trimmings 205 and possibly pellets that do not have the desired properties and dimensions can be recycled back to the extruded mass compaction 304 so that no material is wasted.

Furthermore, a fibrillation degree detection system 307 is arranged before the extruded mass compaction 304 and after the pellet manufacturing 305. An optical camera system 308 is arranged after the pellet manufacturing 305 and also before the film formation process 303. The optical camera system 308 can for example be connected to an evaluation unit which can interpret image files that were recorded by the optical camera system 308. The optical camera system 308 can for example determine different granule or pellet colors.

### Reference signs

- 100: pelletizing device
- 101, 102: roll
- 103: cavity
- 104: temperature-control-device
- 105: compressed air system
- 106: channel
- 107: part-channel
- 108: surface
- 200: pelletizing system
- 201: compaction system
- 202: extruded mass
- 203: conveyor belt
- 204: sieving system
- 205: trimming
- 206: tilted surface
- 207: roll-sieve
- 207a: openings
- 208: front end
- 209: formation step
- 210: recycling system
- 301: continuous mixing step
- 302: pelletizing process
- 303: film formation process
- 304: extruded mass compaction
- 305: pellet manufacturing
- 306: pellet sieving
- 307: fibrillation degree detection system
- 308: optical camera system

## Claims

1. A pelletizing device (100), for a dry battery electrode (DBE) manufacturing process, comprising:
two rolls (101, 102) arranged in parallel to one another,
wherein the rolls (101, 102) rotate in opposite directions,
wherein at least one of the rolls (101, 102) comprises a plurality of cavities (103) in which pellets can be formed, and
wherein the structure of the cavities (103) is based on the desired shape and size of the pellets.

2. The pelletizing device (100) as claimed in claim 1, wherein at least one of the rolls (101, 102) comprises a temperature-control-device (104) allowing temperature control of the roll (101, 102) via internal flow of water, steam or oil.

3. The pelletizing device (100) as claimed in claim 1 or 2, wherein at least one roll (101, 102) comprises at least one channel (106) that leads to at least one cavity (103) and is connected to a compressed air system (105), in order to facilitate release of the pellets.

4. The pelletizing device (100) as claimed in any of the claims 1 to 3, wherein brushes or blades are placed close to a pellet ejection area to facilitate the removal of the pellets.

5. A pelletizing system (200), for a dry battery electrode (DBE) manufacturing process, comprising:
a compaction system (201) for compacting an extruded mass (202) or a mixed mass; and
a pelletizing device (100) as claimed in any one of claims 1 to 4,
wherein the compaction system (201) is connected to the pelletizing device (100) to feed compacted extruded mass (202) or compacted mixed mass to the pelletizing device (100).

6. The pelletizing system (200) as claimed in claim 5, wherein the pelletizing system (200) further comprises a sieving system (204) connected to the pelletizing device (100) to separate pellets of a chosen size from trimming (205) of the compacted extruded mass (202) or the compacted mixed mass and pellets of a size different from the chosen size.

7. The pelletizing system (200) as claimed in claim 6, wherein a recycling system (210) is connected with the sieving system (204) and the compaction system (201).

8. The pelletizing system (200) as claimed in any one of claims 5 to 7, wherein a fibrillation degree detection system is arranged before the compaction system (201) and/or wherein a fibrillation degree detection system is arranged after the pelletizing device (100).

9. The pelletizing system (200) as claimed in any one of claims 5 to 8, wherein at least one optical camera system (308) is arranged after the pelletizing device (100), and/or wherein at least one optical camera system (308) is arranged after the sieving system (204).

10. The pelletizing system (200) as claimed in any one of claims 5 to 9, wherein a tilted surface (206) is placed after the sieving system (204), acting as pellets accumulation zone.

11. The pelletizing system (200) as claimed in claim 10, wherein a control camera system is arranged in the area of the tilted surface (206) and wherein the control camera system is equipped to measure a flowing angle and/or cohesion of the pellets in the area of the tilted surface.

12. The pelletizing system (200) as claimed in any one of claims 5 to 11, wherein the pelletizing system (200) further includes an air-cooling system that is equipped to lower and/or maintain the temperature of the pellets leaving the pelletizing device at a value between 0°C and 50 °C.

13. A method for dry battery electrode (DBE) manufacturing, wherein the method comprises the steps of:
a) compacting an extruded mass (202) or compacting a mixed mass; and
b) feeding the compacted extruded mass or the compacted mixed mass to a pelletizing device as claimed in any one of claims 1 to 4 to form pellets.

14. The method as claimed in claim 13, wherein the pellets are expelled from the pelletizing device (100) are separated from trimmings (205) and sent to a feeding system for a film formation process (303).

15. The method as claimed in claim 13 or 14, wherein the method is carried out in a pelletizing system (200) as claimed in any one of claims 5 to 12.
